# EUROPEAN PATENT SPECIFICATION

(11) **EP 0 725 474 B1**
(45) Date of publication and mention of the grant of the patent: **14.11.2001**
(21) Application number: 96101275.4
(22) Date of filing: 30.01.1996
(51) Int. Cl.: H02K 51/00, B60L 11/12, B60K 17/12, B60K 6/04

(54) **System and method for driving electric vehicle**
System und Verfahren zum Antrieb eines Elektrofahrzeugs
Système et méthode de commande de véhicule électrique

(30) Priority: 31.01.1995 JP 1370095; 31.01.1995 JP 1369995; 08.06.1995 JP 14174495; 09.06.1995 JP 14299195; 09.06.1995 JP 14299395
(43) Date of publication of application: 07.08.1996
(73) Proprietor: DENSO CORPORATION, Kariya-City Aichi-Pref. 448 (JP)
(72) Inventor: Seguchi, Masahiro, c/o Nippondenso Co., Ltd., Kariya-city, Aichi-pref. (JP); Banzai, Keiichiro, c/o Nippondenso Co., Ltd., Kariya-city, Aichi-pref. (JP)
(74) Representative: Tiedtke, Harro, Dipl.-Ing.

(56) References cited:
- WO-A-82/00928
- AU-A- 5 840 173
- FR-A- 2 517 137
- FR-A- 2 693 527
- GB-A- 2 278 242
- US-A- 3 683 249
- US-A- 3 789 281
- US-A- 4 407 132

## Description

### BACKGROUND OF THE INVENTION

### 1. Field of the Invention

The present invention relates to a system and method for driving an electric vehicle and, more particularly, relates to a hybrid-type electric-vehicle-driving system with electric power generated by an internal combustion engine.

### 2. Description of Related Art

Japanese Patent Laid-Open Sho 60-1069 discloses a hybrid-type electric-vehicle-driving system with electric power generated from an internal combustion engine. Such an electric-vehicle-driving system is composed of a generator which is mechanically connected to a drive shaft of an internal combustion engine, an electric motor for driving vehicle wheels, battery unit for storing electric power of the generator and energizing the electric motor and a control unit for regenerating electric power by the electric motor when the vehicle speed is reduced.

However, since all the driving power of the above conventional system is applied to the wheels through electric power system including the generator, the battery unit and the motor, the power system is necessarily required to have a large size. In addition, since the energy conversion is made a plurality of times, the total efficiency of the system is not so high.

Japanese Patent Laid-Open Sho 58-130704 discloses a torque-speed converting system, in which engine power is converted into electro-magnetic induction force and transmitted to the vehicle wheels by a wheel-drive motor having control coils and, as required, electric power is supplied from a battery to the wheel-drive motor, or kinetic energy of the vehicle is converted by the wheel-drive motor (functions as a generator) to electric power to be stored into a gyro wheel.

However, since the frequency of the induction current applied to the control coils (short-circuited coils) of the dirive-motor is proportional to the engine rotational speed and can not be changed, it is not possible to control the rotational speed of the vehicle wheels although the torque can be changed.

Furthermore, GB-A-2 278 242 describes an electromagnetic transmission system which comprises an input rotor arranged concentrically with an output rotor within a casing. The rotors and the casing are rotatable relative to each other around a common axis and the casing and the input rotor are provided with windings to form electromagnets. The output rotor which is radially interposed between the input rotor and the casing consists of permanent magnets arranged with alternating polarity in the circumferential direction of the rotor. With this device, under appropriate control of the current in the windings, a speed/torque conversion can be achieved.

Similar devices are known from the US 3,789,281 and US 3,683,249 also having an input rotor, an output rotor and a casing concentrically arranged and rotatable relative to each other around a common axis. The output rotor which is arranged radially between the input rotor and the casing is provided with a rotary yoke having protruding portions projecting therefrom in radial outward and inward directions, wherein the protruding portions are enclosed by windings so as to form electromagnets. With these devices, a speed/torque conversion especially for operating an electric or so-called hybrid vehicle having an internal combustion engine can be achieved.

It is the object of the invention to provide a system for driving an electric vehicle, which is capable of converting rotational speed and torque of an engine into set speed and set torque with a high efficiency. This object is solved with a system having the features of claim 1.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:
Fig. 1 is a schematic cross-sectional side view illustrating a system according to a first embodiment of the present invention;
Figs. 2A, 2B, 2C and 2 D are graphs showing how the system according to the first embodiment converts torque and rotational speed of they engine into set torque and rotational speed of the vehicle;
Fig. 3 is a cross-sectional schematic view illustrating a main portion of a T-S converter of the system cut along a line III-III in Fig. 1;
Fig. 4 is a cross-sectional plan view illustrating a main portion of a T-S converter according to an unclaimed example;
Fig. 5 is a schematic cross-sectional side view illustrating a system according to a second embodiment of the present invention;
Figs. 6A, 6B, 6C and 6D are graphs showing how the system according to the second embodiment converts torque and rotational speed of the engine into set torque and rotational speed of the vehicle;
Fig. 7 is a schematic cross-sectional side view illustrating an unclaimed example of a system
Fig. 8 is a flow chart of steps for controlling a system according to the present invention;
Fig. 9 is a flow chart of a sub-routine of a step in the flow chart shown in Fig. 8;
Fig. 10 is a flow chart of a sub-routine of a step in the flow chart shown in Fig. 8;
Fig. 11 is a schematic cross-sectional side view illustrating a further unclaimed example of a system;
Fig. 12 is a schematic cross-sectional side view illustrating a system according to a third embodiment of the present invention;
Fig. 13 is a schematic cross-sectional side view illustrating a system according to a fourth embodiment of the present invention;
Fig. 14 is a schematic cross-sectional side view illustrating a portion of the system shown in Fig. 13; and
Figs. 15A, 15B, 15C, 15D, 15E and 15 F are cross-sectional views illustrating variations of a second rotor of the T-S converter.

### DETAILED DESCRIPTION OF THE PREFERRED EMBODIMENT

### (First Embodiment)

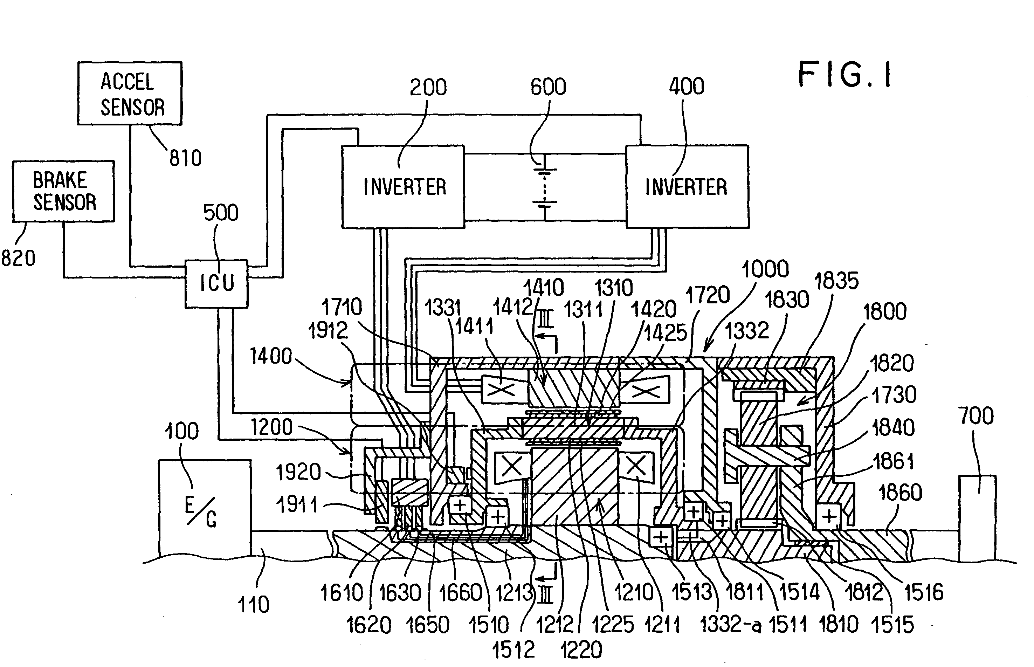

A system for driving an electric vehicle according to a first embodiment of the present invention is described with reference to Fig. 1.

A torque-rotational speed converter 1000 (T-S converter) is a driving unit which is driven by an engine 100 to drive vehicle wheels 700 at driving torque and rotational speed controlled according to vehicle driving conditions. The T-S converter is composed of a speed control section 1200 which is a synchronous motor structure to be described later, a torque control section 1400 which is another synchronous motor structure to be described later and a speed reduction section 1800. An inverter 200 has power switching transistors (not shown) therein and converts the DC-current supplied from a battery 600 into three phase AC current, which is supplied to the speed control section 1200 of the T-S converter. The inverter 200 also converts AC current generated by the speed control section 1200 into DC current to charge the battery 600 when the speed control section 1200 is driven by the vehicle wheels 700. An inverter 400 also converts DC current into AC current and AC current into DC current between the battery 600 and the torque control section 1400 of the T-S converter 1000 in the same manner as the inverter 200. An inverter control unit 500 controls the inverters 200 and 400 according to signals transmitted from an accelerator sensor 810, a brake pedal sensor 820, rotation sensors 1911 and 1912 (to be described later) and other sensors. Joint members and speed reduction mechanisms, which are used in the ordinary vehicle, may be disposed between the engine 100 and the T-S converter 1000, and also between the T-S converter 1000 and the wheels 700. An engine shaft 110 of the engine 100 is connected to an input shaft 1213 of the T-S converter 1000 through a coupling (not shown).

The T-S converter 1000 is composed of a pair of cylindrical outer frames 1710 and 1720, a cylindrical first rotor 1210 which is carried by the input shaft 1213, a second rotor 1310 which is rotatably disposed around the first rotor 1210 at a gap and a stator 1410 fixed to an inner periphery of the outer frame 1710. The input shaft 1213 extends from the center of an end of the outer frame 1710 and is connected with the engine shaft 110. The stator 1410 has a stator core and a control coil 1411 which generates a rotating magnetic field when energized by the inverter 400. The first rotor 1210 has a rotor core 1212 and a control coil 1211 which forms a rotating magnetic field. A brush holder 1610, three brushes 1620 and three slip rings 1630 are disposed in a cover case 1920 to supply three phase electric power to the control coil 1211 of the first rotor 1210. Shaft supporting members such as bearings 1510 and 1511 are fixed to the driven shaft 1213. The control coil 1211 and the slip ring 1630 are connected by lead wires 1660 passing under the bearing 1512 with an insulating member 1650. The insulating member 1650 is inserted in a groove formed in the input shaft 1213 so as to go under the bearing 1512. The second rotor 1310 has a hollow rotary yoke 1311 and a plurality of internal permanent magnets 1220 are fixed to the inner periphery thereof by a ring 1225 at an equal interval to provide N and S poles alternately. The hollow rotary yoke 1311 is supported by the outer frames 1710 and 1720 via rotor frames 1331 and 1332 and bearings 1510 and 1511. The input shaft 1213 is rotatably supported by the rotor frames 1331 and 1332 via bearings 1512 and 1513. The permanent magnets 1220, the rotor core 1212 and the control coil 1211 compose a synchronous motor which corresponds to the aforementioned speed control section 1200. The second rotor 1310 also has a plurality of external permanent magnets 1420 fixed to the outer periphery of the hollow rotary yoke 1311 by a ring 1425 at an equal interval to provide N and S poles alternately. The permanent magnets 1420, the stator core 1412 and the control coil 1411 compose a synchronous motor which corresponds to the aforementioned torque control section 1400. The rotation sensors 1911 and 1912 are disposed respectively in the cover case 1920 and in a space between a rotor frame 1331 of the second rotor 1310 and the outer frame 1710. The sensor 1911 and 1912 are connected to the inverter control unit 500 to control rotational speed and torque of the first and second rotors 1210 and 1310 as described later.

The speed reduction Section 1800 of the T-S converter 1000 has a sun gear shaft 1810, a planetary gear 1820, an internal gear 1830, a planetary gear shaft 1840 and an output shaft 1860. An input gear 1811 is formed on an end of the sun gear shaft 1810 in mesh with an internal gear 1332a of a boss portion of the rotor frame 1332. The sun gear shaft 1810 is rotatably supported by the outer frame 1720 and the output shaft 1860 respectively via bearings 1514 and 1515. The rotation is transmitted from the second rotor 1310 to the output shaft 1860 through the sun gear shaft 1810, a sun gear 1812 formed around the sun gear shaft 1810 in mesh with the planetary gear 1820. The rotational speed is reduced by the internal gear 1830 and the planetary gear shaft 1840, and is transmitted to a planetary gear carrier portion 1861 formed integrally with the output shaft 1860. The output shaft 1860 is rotatably supported by a bearing 1516 which is fitted to a boss portion of a frame 1730 of the speed reduction section 1800. The sun gear shaft 1810 and the output shaft 1860 are disposed in line with the input shaft 1213. The internal gear 1830 is fixed to the frame 1730 of the reduction section 1800 via a fixing member 1835.

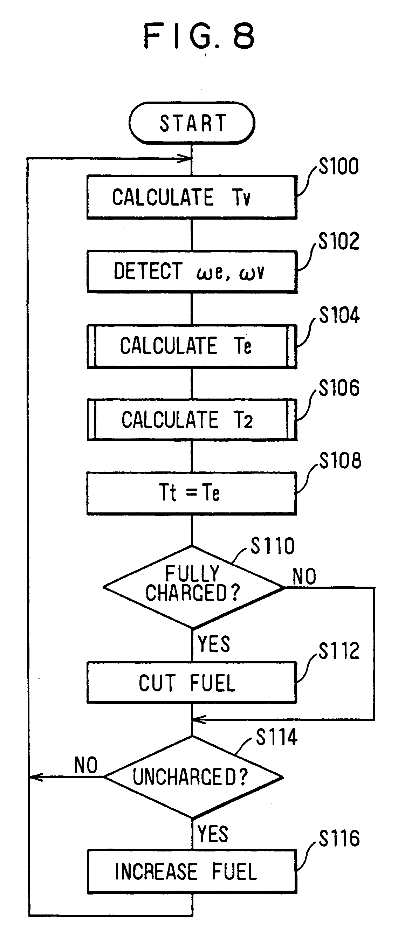

Operation of the T-S converter 1000 is described with reference to a flow chart shown in Fig. 8.

When the inverter control unit 500 is started, a set-torque Tv for the vehicle wheels 700 is determined according to a signal representing the throttle-open-angle detected by the accelerator sensor 810 and a signal representing brake-pedal-operation detected by the brake pedal sensor 820 in a step S100. Then, angular speeds ωe of the first rotor 1210 and ωv of the second rotor 1310 are determined according to signals from the rotation sensors 1911 and 1912 in a step S102. Subsequently, engine torque Te generated by the engine 100 is calculated from the throttle-open-angle signal and the angular speed signal ωv on the basis of a data map of the inverter control unit 500 (step S104). Transmitting torque Tt which is transmitted between the first rotor 1210 and the second rotor 1310 is determined in the following step. The transmitting torque Tt is set to be equal to the engine torque Te. That is, no addition to or reduction from the engine torque Te is made between the first and second rotors 1210 and 1310 except a slight torque change in order to maintain the drive-stability of the vehicle. In order to eliminate the slight torque change between the first and second rotors 1210 and 1310, rotational speed of the second rotor 1310 is controlled by the inverter 200.

The torque T2 for the torque control section 1400 to supplement difference between the transmitting torque Tt and the set torque Tv is determined in a step S106. That is, the relationship of the torque is expressed as T2 = Tv - Tt = Tv - Te. Subsequently, the inverter 400 controls the torque control section 1400 to generate the supplemental torque T2 in a step S108.

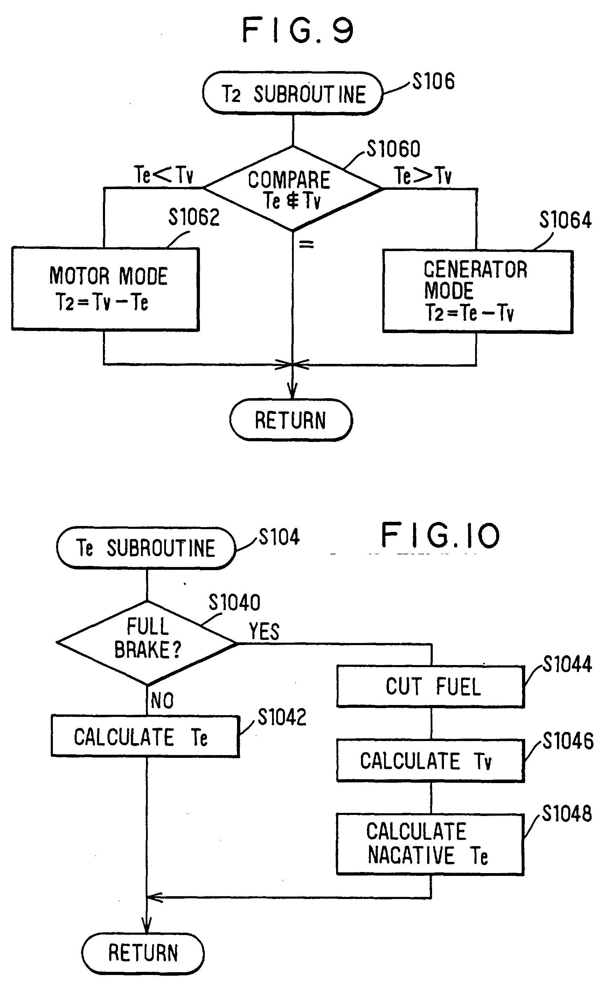

The torque control section 1400 operates as a generator or a motor according to a difference between the engine torque Te and the set torque Tv in the step S 106 as shown in Fig. 9.

When the engine torque Te is detected smaller than the set torque Te in a step 1060, the process goes to a step 1062 where the torque control section 1400 is controlled to become a wheel-drive motor which generates the torque T2 = Tv - Te with power supplied from the inverter 400. If the engine torque Te is detected larger than the set torque Tv on the other hand, the process goes to a step S1064, where the torque control section 1400 is controlled to become a generator which is driven by the torque T2 = Te - Tv. If the engine torque Te is equal to the set torque Tv, the torque control section 1400 does not function as a motor or a generator.

The engine torque Te may be calculated from the brake-pedal-operation signal transmitted from the brake pedal sensor 820 as shown in Fig. 10. When the vehicle is driven on a steep slope and the brake pedal is operated to a degree more than a predetermined degree, fuel supply to the engine is stopped thereby to stop driving the first rotor 1210 in a step S1044. Then, the set torque Tv is calculated only from the brake pedal signal in a step S1046, and a negative value of the engine torque Tv at an angular speed ωe is calculated in a step S1048 so that the inverter 400 controls the torque control section 1400 to operate as a regenerative brake.

When the brake pedal is determined to operate within the predetermined degree in the step S1040 on the other hand, the torque Te is calculated in the ordinary manner from the throttle-open-angle signal, the angular speed ωe and etc. in a step S1042.

Then, charging state of battery 600 is detected by a well-known manner (for example, by calculating from battery voltage and charging current) in a step S 110 in Fig. 8. If the charging ratio is higher than a maximum value, the control of the first rotor by the inverter 200 is stopped and only the control by the torque control section 1400 is permitted. At this time, the fuel supply to the engine 100 is cut or reduced in a step S112. Then, the process returns to the step S100 if the charging ratio is detected not lower than a minimum value in a step S114. When the battery charging ratio is not higher than the maximum value on the other hand, the process goes to a step S114, and to a step S116 if the battery charging ratio is lower than the minimum value. The process returns to the step S100 after the fuel supply to the engine 100 is increased in the step S116.

The transmitting torque Tt is controlled to substantially equal to the engine torque Te by the speed control section 1200 according to the above embodiment. However, it is possible to control the second rotor 1310 to rotate at a speed higher than the first rotor 1210, while the torque is maintained constant. That is, the frequency of the AC current supplied by the inverter 400 to the stator 1410 is increased to corresponds to the rotational speed of the second rotor and the frequency of the AC current supplied by the inverter 200 to the second rotor 1310 is controlled to correspond to a difference between the rotational speeds of the first rotor 1210 and the second rotor 1310.

Operation of the T-S converter 1000 when the engine rotates at a speed 2n [rpm] with a torque t [N·m] and the vehicle runs at a speed n [rpm] with a torque 2t [N·m] is described with reference to Fig. 1, Figs. 2A through 2D and Fig. 3. The speed and the torque of the engine and the vehicle wheels are treated here as if the engine and the wheel were connected directly in order to make the discussion simple.

Since the second rotor 1310 is mechanically connected to the output shaft 1860 via the reduction section 1800, the rotational speed of the second rotor 1310 must be controlled by the speed control section 1200 to correspond to the vehicle speed.

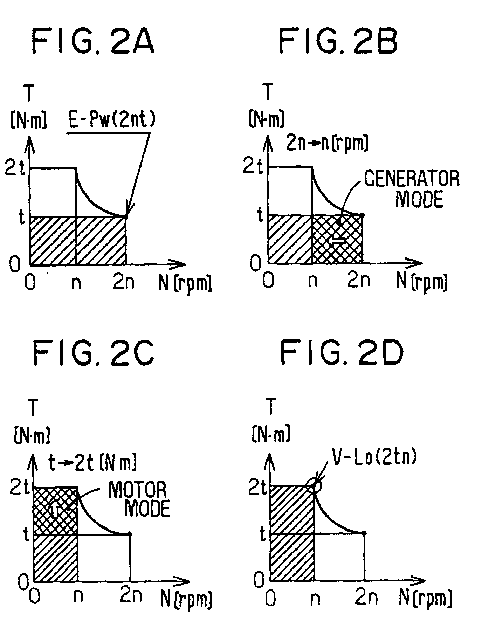

The engine rotation at the speed 2n [rpm] with the torque t [N·m] shown in Fig. 2A is transmitted to the input shaft 1213 of the T-S converter 1000 through a coupling (not shown), and to the first rotor 1210. The rotational speed 2n [rpm] of the second rotor 1310 is reduced to n [rpm] by induction force or electromagnetic force of the speed control section 1200 and transmitted to the vehicle wheels 700 as shown in Fig. 2B.

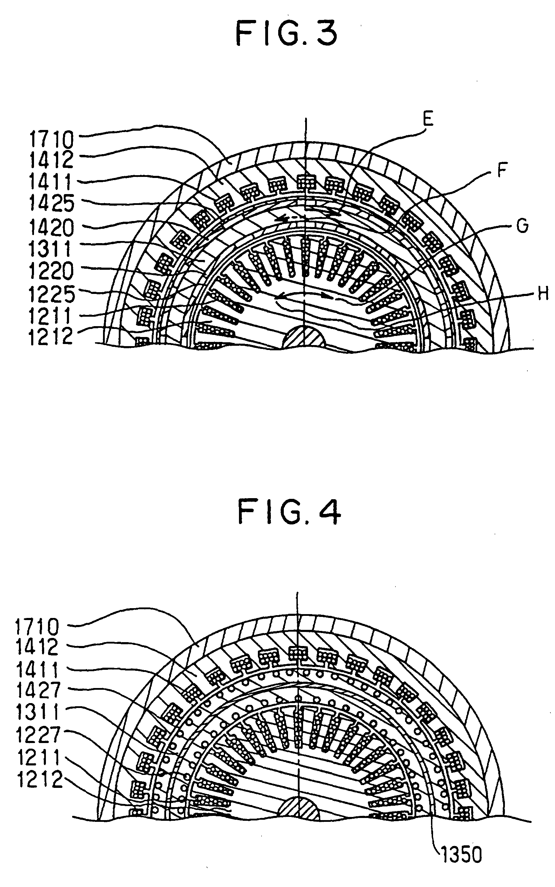

In order to change the speed of the second rotor 1310 from 2n [rpm] to n [rpm] while maintaining the same torque t as shown in Fig. 2B, the direction F of the rotation of the second rotor 1310 relative to the first rotor 1210 becomes opposite to the direction E of the torque of the second rotor as shown in Fig. 3. (Incidentally, an arrow G indicates the direction of the engine torque, and an arrow H indicates the direction of the torque from the vehicle wheels.) The speed control section of the T-S converter 1000 operates in the generating mode at this moment. The rotation of the second rotor 1310 relative to the first rotor 1210 is detected by the rotation sensors 1911 and 1912 and the control coil 1211 of the first rotor 1210 is energized at timing calculated on the basis of the relative rotation. The power generated in the control coil 1211 of the first rotor 1210 is supplied to the battery 600 and to the torque control section 1400 through the slip rings 1630, the brushes 1620. Thus, the second rotor 1310 rotates the output shaft 1860 at the speed n [rpm] with the torque t [N·m] to generate energy nt [N·m][rpm] as indicated by cross hatching in Fig. 2B. In other words, the T-S converter 1000 can transmit the driving torque t of the engine to the vehicle wheels 700 without change and generates electric power by the difference in the rotation between the engine 100 and the vehicle wheels 700.

Then, the inverter 400 supplies the stator control coil 1411 of the torque control section 1400 with AC control current at timing calculated from the signal of the rotation sensor 1912 so that the second rotor 1310 can rotate at the speed n [rpm] with the torque 2t [N·m]. That is, the torque control section 1400 is energized by the inverter 400 to generate an additional torque t as a motor as indicated by cross-hatching in Fig. 2C. The rotation of the second rotor 1310 is transmitted through the internal gear 1332a of the rotor frame 1332, the input gear 1811 and the reduction section 1800 to the output shaft 1860.

Thus, the power of the engine which rotates at a speed 2n [rpm] with a torque t [N·m] as shown in Fig. 2A can be applied to the vehicle runs at a speed n [rpm] with a torque 2t [N·m] as shown in Fig. 2D.

The speed control section 1200 can operate as a motor for driving the vehicle wheel if the vehicle requires speed higher than the speed of the engine 100. The torque control section 1400 can operate as a generator for charging battery if the engine torque exceeds torque required by the vehicle.

The convertion of the torque and speed between the engine and the vehicle wheel can be carried out also when the power of the engine and load of the vehicle wheel is different in the same manner as described above. For example, when the vehicle runs on a steep uphill slope, the control unit 500 controls the inverters 200 and 400 to supply electric power to the control coils 1211 and 1411 thereby to assist the engine to drive the vehicle wheels as required. On the other hand, when the vehicle runs on a steep down hill, the control unit 500 controls the inverter 200 and 400 to charge electric power generated by the control coils 1211 and 1411 to the battery.

When the vehicle needs further slow down, the speed control section 1200 connects the wheel to the engine 100 as a brake or a compressor. Thus, torque control section 1400 is not required to have large braking power, resulting in a compact size.

An unclaimed example of a system for driving an electric vehicle is described with reference to Fig. 4.

The second rotor 1310 according to this example has squirrel-cage-conductors 1227 and 1427 instead of the permanent magnets. Accordingly, the second rotor 1310 operates as an induction motor instead of a synchronous motor in the first embodiment.

A cylindrical non-magnetic layer 1350 is disposed between the squirrel-cage-conductors in order to prevent magnetic interference between the speed control section 1200 and the torque control section 1400, as shown in Fig. 4 which is a cross-sectional view illustrating a main portion of the T-S converter 1000.

Since the T-S converter according to this example is composed of the induction type second rotor 1310, the rotation sensors 1911 and 1912 can be replaced with a crank angle sensor or vehicle speed sensor disposed near the vehicle wheel.

### (Second Embodiment)

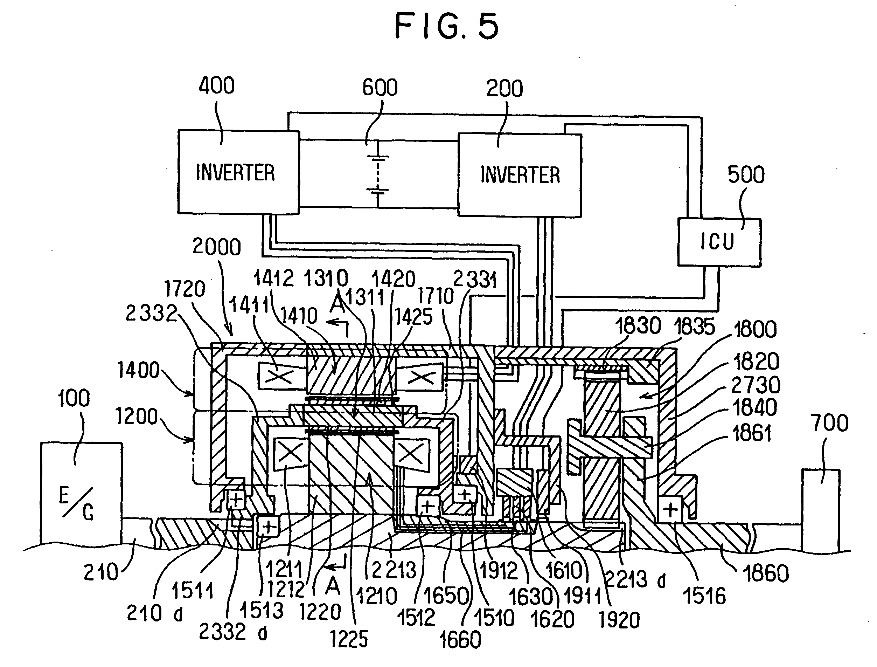

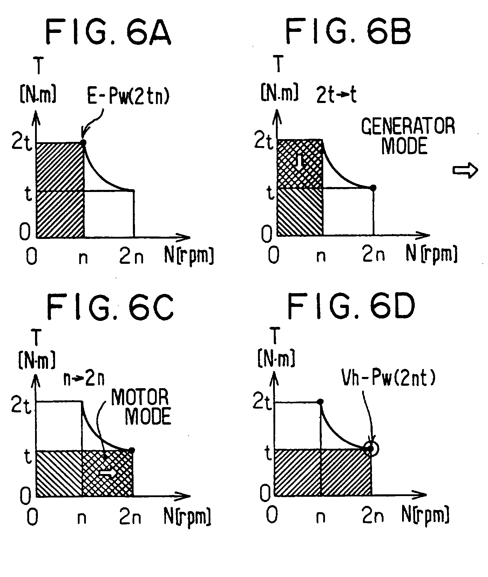

A T-S converter 2000 according to a second embodiment is described with reference to Fig. 5 and Figs. 6A, 6B, 6C and 6D.

A gear 210d is formed on the end of an output shaft 210 of the engine 100 to be in mesh with an internal gear 2332d formed in a frame 2332 of the second rotor 1310 so that the engine power is transmitted to the second rotor 1310 directly. The first rotor 1210 is carried by a shaft 2213 which is disposed in alignment with, but separate from, the engine output shaft. A sun gear 2213d of the speed reduction section 1800 is formed at an end of the shaft 2213 opposite the engine 100.

Driving power is transmitted from the first rotor 1210 through the gear 2213d to the planetary gear 1820. Then, after the rotational speed of the planetary gear 1820 is reduced by the internal gear 1830, the driving power is transmitted through the planetary gear shaft 1840 and the planetary carrier 1861 to the output shaft 1860. The output shaft 1860 is rotatably supported by the bearing 1516 which is fitted to a boss portion of a frame 2730 of the speed reduction section 1800. The internal gear 1830 is fixed to the frame 2730 via the fixing member 1835. The cover case 1920, the rotation sensors 1911 and brush holder 1610 are disposed in the frame 2730 together with the reduction section 1800.

Operation of the T-S converter 2000 is described with reference to Fig. 5, and Figs. 6A through 6D.

When the engine 100 rotates at a speed n [rpm] with a torque 2t [N·m] as shown in Fig. 6A and the vehicle runs at a speed 2n [rpm] with a torque t [N·m] as shown in Fig. 6D, the engine rotation is transmitted from the output shaft 210 and a coupling (not shown) through the internal gear 2332d to the second rotor 1310. The inverter 400 supplies the stator control coil 1411 of the torque control section 1400 with AC control current at timing calculated from the signal of the rotation sensor 1912 so that the second rotor 1310 can rotate at the speed n [rpm] with the torque t [N·m]. That is, the torque control section 1400 changes the torque 2t [N·m] transmitted from the engine 100 to t [N·m] as shown in Fig. 6b while maintaining the speed n [rpm] and generates electric power which corresponds to tn [Nm][rpm]. The generated power is supplied from the control coil 1411 to the battery 600 through the inverter 400.

Then, the torque t of the second rotor 1310 is transmitted to the first rotor 1210 of the speed control section 1200 through the permanent magnets 1220 disposed on the inner periphery of the second rotor 1310.

The rotational speed n [rpm] of the first rotor 1210 is changed to 2n [rpm] by induction force or electromagnetic force of the speed control section 1200 to correspond to the vehicle speed and transmitted to the vehicle wheel 1310 as shown in Fig. 6C. When the speed of the second rotor 1310 is changed from n [rpm] to 2n [rpm] while maintaining the same torque t as shown in Fig. 6C, the direction of the rotation of the first rotor is the same as the direction of the rotation of the second rotor 1310 and, therefore, the T-S converter 2000 operates in the motor mode. The rotation of the first rotor 1210 relative to the second rotor 1310 is detected by the rotation sensors 1911 and 1912 to energize the control coil 1211 of the first rotor 1210 at timing calculated on the basis of the relative rotation, and electric power is supplied to the speed control section 1200 by the inverter 200. The first rotor 1210 rotates at the speed 2n [rpm] with the torque t [N·m] by consuming energy nt [N·m][rpm] of the battery as indicated by cross hatching in Fig. 6C.

Thus, the power of the engine which rotates at a speed n [rpm] with a torque 2t [N·m] as shown in Fig. 6A can be applied to the vehicle which runs at a speed 2n [rpm] with a torque t [N·m] as shown in Fig. 6D.

The speed control section 1200 can operate as a motor when the engine speed is higher than the vehicle speed, and the torque control section 1400 can operates as a generator when the vehicle load is larger than the engine torque, as described with regard to the first embodiment.

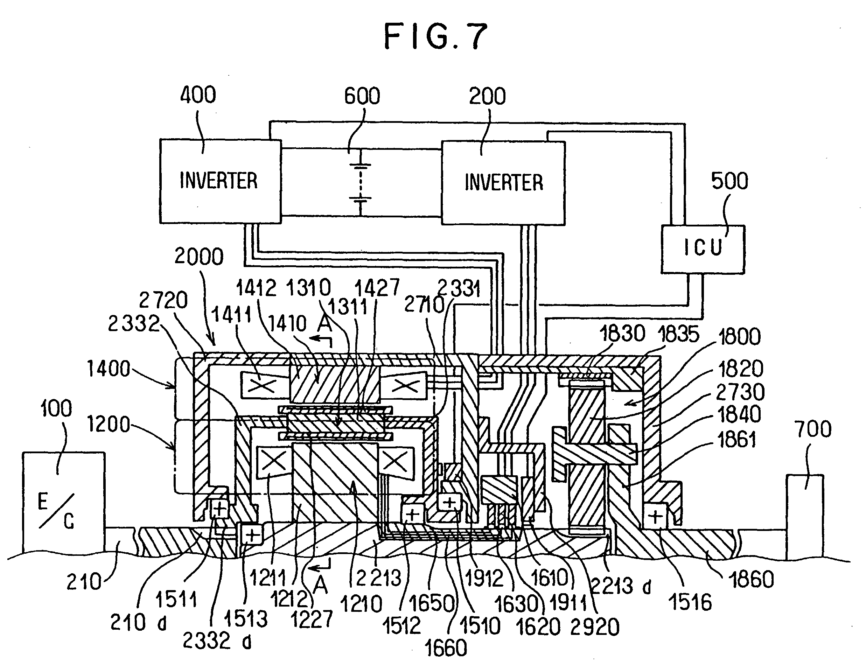

A T-S converter according to a further unclaimed example is described with reference to Fig. 7.

The second rotor 1310 has squirrel-cage-conductors 1227 and 1427 instead of the permanent magnets of the T-S converter 2000 according to the second embodiment shown in Fig. 5. Accordingly, the second rotor 1310 operates as an induction motor instead of a synchronous motor in the first embodiment.

A cylindrical non-magnetic layer 1350 is disposed between the squirrel-cage-conductors in order to prevent magnetic interference between the speed control section 1200 and the torque control section 1400, as shown in Fig. 4.

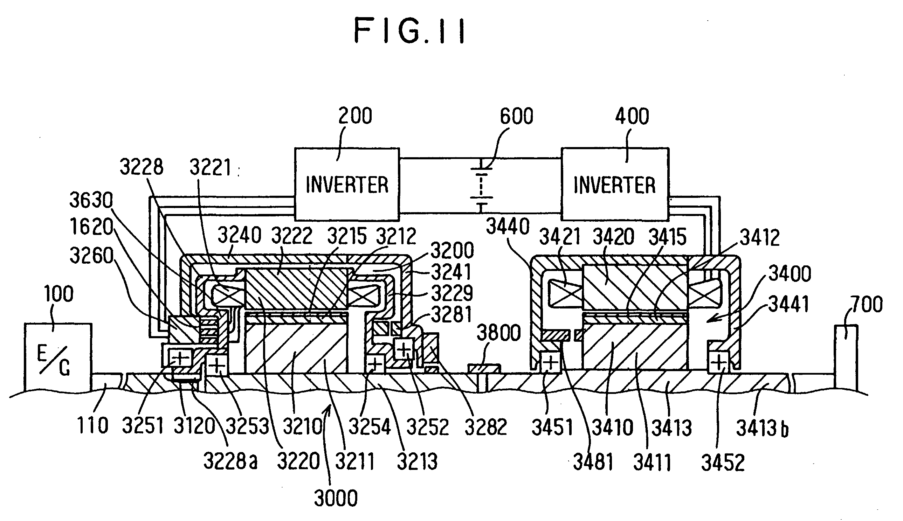

A T-S converter 3000 according to another unclaimed example is described with reference to Fig. 11. The T-S converter 3000 is composed of a speed control section 3200 and a torque control section 3400 disposed tandem on an axis.

The speed control section 3200 is structured as a three-phase synchronous rotary electric machine and is composed of housings 3240 and 3241, a cylindrical second rotor 3220 supported by the housings 3240 and 3241 through bearings 3251 and 3252 and a first rotor.

The second rotor 3220 is connected to the output shaft 110 of the engine 100 and carries a shaft 3213 of a first rotor 3210 in line with the output shaft 110 of the engine 100 via bearings 3253 and 3254. The second rotor has a stator core 3222, a three-phase-winding coil (known as a coil of the three-phase rotary machine) 3221 and a pair of end frames 3228 and 3229.

The first rotor 3210 has a shaft 3213, a rotor core 3211 made of a soft iron which is fixed to the shaft 3213, magnetic poles having permanent magnets secured to the outer periphery of the core by a non-magnetic ring 3215 in structure well-known as a permanent magnet rotor of a generator.

An annular slip ring member 3630 is fixed to a radially inner portion of the end frame 3228. The slip ring member 3630 has three slip rings, which are connected to each phase winding of the coil 3221 and supported-by an insulating member.

A brush member 3260 is connected to the inverter 200 and fitted to an opening which is formed on an end portion of the housing 3240. The brush member 3260 has a brush holder, three brushes 1620 slidably disposed in the brush holder and springs which bias the brushes against the slip rings. The inverter 200 supplies the coil 3221 with control current through the brush member 3260 and the slip ring member 3630.

A rotational speed sensor 3281 is disposed between an inner surface of the housing 3241 and an outer surface of the end frame 3229 to detect rotational speed of the second rotor 3220 and to send a signal to the inverter control unit 500 (which is described before). A rotational speed sensor 3282 is disposed between the outer surface of the housing 3241 and the shaft 3213 of the first rotor 3210 to detect rotational speed of the first rotor 3210 and send a signal to the inverter control unit 500.

The speed control section 3200 can be structured as an induction type rotary machine which provides squirrel cage conductors instead of the permanent-magnet poles.

The torque control section 3400 is a three-phase synchronous rotary machine. The torque control section 3400 has a third rotor 3410, housings 3440 and 3441 which support the third rotor 3410 via bearings 3451 and 3452, a stator core 3420 secured to the housing 3440 and a stator coil 3421 which is connected to the inverter 400. The third rotor 3410 has a shaft 3413 connected in line to the shaft 3213 of the first rotor 3210 by a coupling member 3800, a rotor core 3411 made of soft iron and a plurality of magnetic poles 3412 having permanent magnets supported by a non-magnetic ring 3415 in structure well-known as a permanent magnet rotor.

A rotational speed sensor 3481 is disposed between an inner surface of the housing 3440 and an end surface of the third rotor 3410 to detect rotational speed of the third rotor 3410.

When the engine 100 rotates, the second rotor 3220 is driven by the engine 100 and drives the first rotor 3210 and the third rotor which is connected thereto by electromagnetic force generated by the coil 3221 to rotate at a set rotational speed. The coil 3221 is controlled by the inverter 200 in a manner readily understood from the previous description. The inverter 400 supplies the stator coil 3421 with a control current so that the third rotor 3410 drives the vehicle wheels 700 with a set torque at the set speed in the same manner described before.

### (Third Embodiment)

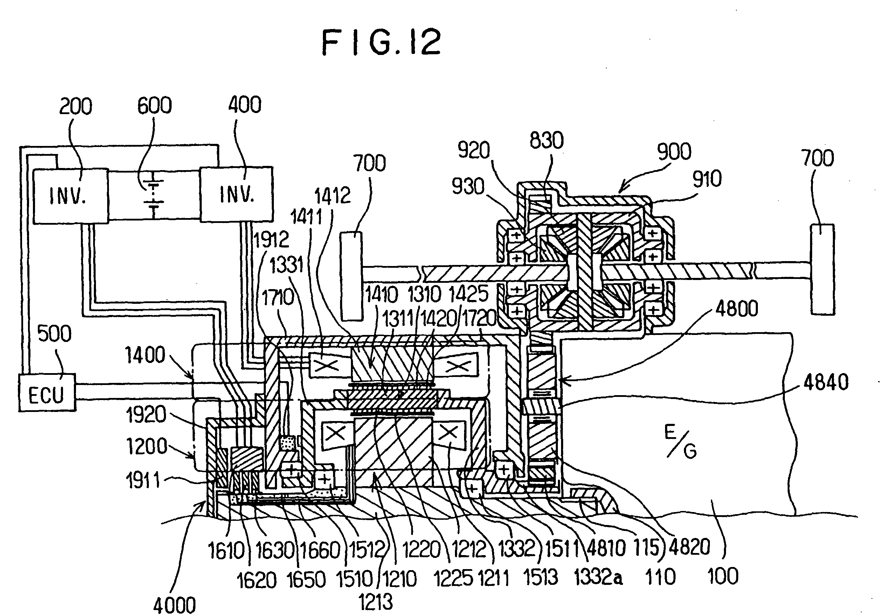

A T-S converter 4000 according to a third embodiment of the present invention is described with reference to Fig. 12.

The input shaft 1213 is connected to the engine output shaft 110 at the same side the speed reduction section 4800 is connected to the vehicle wheels 700 via a differential gear 900 in this embodiment. As a result, the T-S converter 4000 can be mounted in a limited space around the engine.

The speed reduction section 4800 is composed of a small gear 4810 and a large gear 4820 which is carried by a gear shaft 4840 and in mesh with the small gear 4810. The differential gear 900 is a common type which is composed of a large gear 830, a gear box 910 and differential gears 920 and 930 connected to the vehicle wheels 700.

The small gear 4810 of the speed reduction section 4800 is in mesh with the internal gear 1332a of the boss portion of the rotor frame 1332 which rotates as an output shaft of the T-S converter around the input shaft 1213, and the large gear 4820 of the speed reduction section 4800 is in mesh with the large gear 830 of the differential gear 900.

The rotation sensors 1911 and 1912 are disposed at a side remote from the output shaft of the engine and the output member (1332a) of the second rotor so that noise caused by torque transmission between the engine and the converter and between the converter and the vehicle wheels can be prevented from transmitting to the rotation sensors 1911 and 1912.

The brushes 1620 and slip rings 1630 are also disposed remote from the output shaft so that chattering of the brushes caused by the torque transmission can be prevented.

The speed reduction section 4800 can be composed of bevel gears instead of the spur gear.

### (Fourth Embodiment)

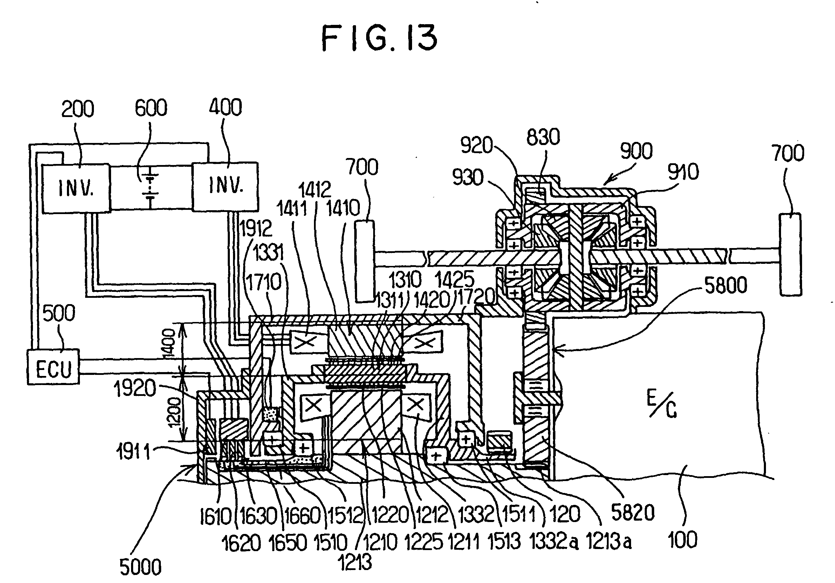

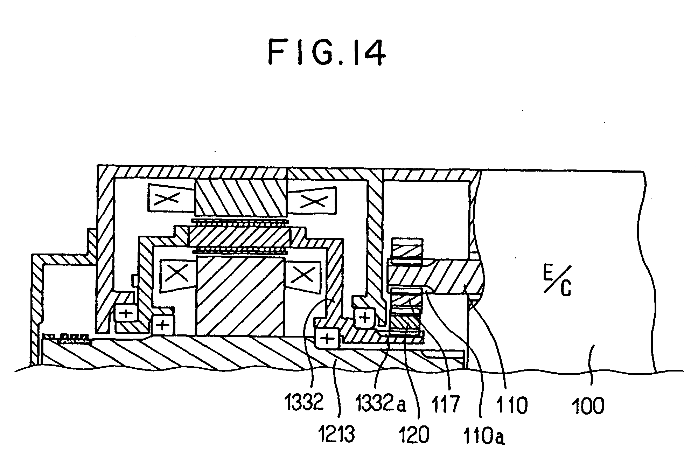

A T-S converter 5000 according to a fourth embodiment of the present invention is described with reference to Fig. 13 and Fig. 14.

A gear 117 is carried by the output shaft 110 of the engine 100 through serrations 110a, and is in mesh with a gear 120 which is connected to the frame 1332 of the second rotor 1310 through serrations 1332a so that the engine power is transmitted to the second rotor 1310 directly as shown in Fig. 14. The first rotor 1210 is carried by the shaft 1213 which is separated from the engine output shaft. A speed reduction section 5800 is composed of a large gear 5820 which is secured to a portion of the engine 100 and is in mesh with the large gear 830 of the differential gear 900 described before. A gear 1213a is formed at the end of the shaft 1213 on the side of the engine 100 and is in mesh with the large gear 5820.

Driving power is transmitted from the first rotor 1210 through the gear 1213a, the large gear 5820 and the deferential gear 900 to the vehicle wheels 700.

### (Variations of the Second Rotors)

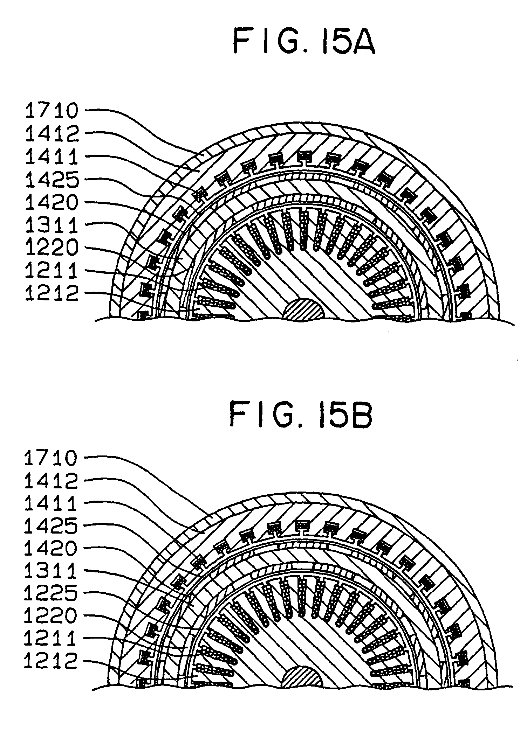

Structural variations of the second rotor 1310 are described briefly with reference to Figs. 15A through 15F.

The number of the internal magnets 1220 of the second rotor 1310 is different from the number of the external magnets 1420, and the internal magnet is wider than the external magnet 1420 as shown in Fig. 15A.

The angular position of the internal magnets 1220 is different from that of the external magnets 1420 as shown in Fig. 15B.

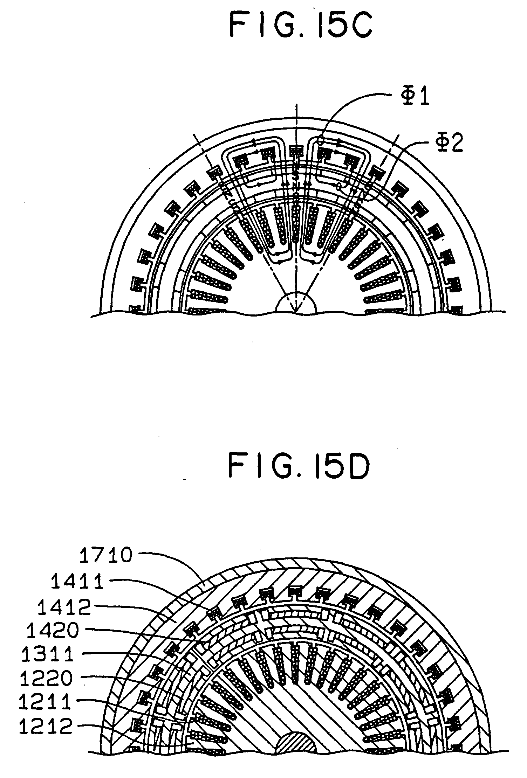

The number and the angular position of both internal and external magnets are the same as shown in Fig. 3 and Fig. 15C, wherein the magnetic polarity on the same angular position is specific. That is, if one of the internal magnets 1220 facing the first rotor 1210 is polarized S, a corresponding one of the external magnets 1420 facing the stator 1410 is polarized N and the adjacent one of the internal magnets 1220 is polarized N and also the adjacent one of the external magnets 1420 corresponding to the last is polarized S so that the composite magnetic flux Φ1 generated by both internal and external magnets interlinks both coils 1211 and 1411 as shown in Fig. 15C. As a result, differential magnetic flux Φ2 passing between both coils 1211 and 1411 is reduced and radial thickness of the rotary yoke 1311 can be reduced.

The above effect can be attained also by a structure shown in Fig. 15D. The internal and external magnets 1220 and 1420 are disposed in cavities hollowed out of the rotary yoke 1311 which is made of laminated thin steel-plates so that the non-magnetic ring 1425 can be omitted. Since the outer periphery of the rotary yoke can be lathed, the gaps between the first and second rotors 1210 and 1310 and between the second rotor 1310 and the stator core 1412-can be reduced, thereby reducing the size of the T-S converter.

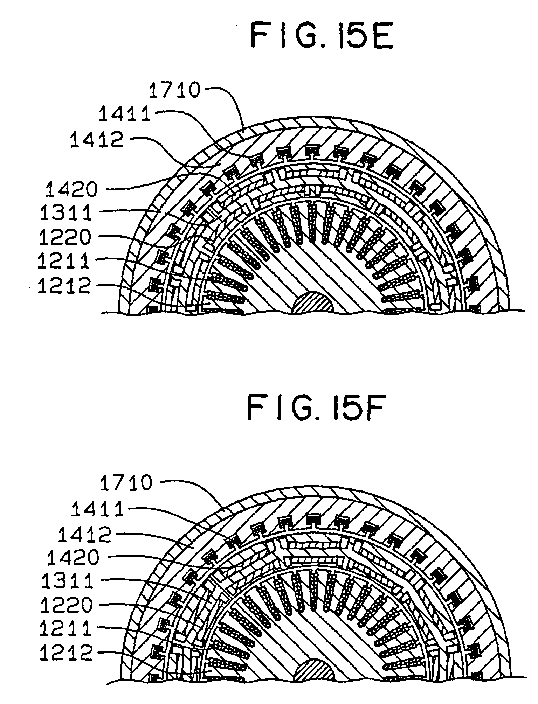

The angular position of the external magnets 1420 is shifted from the angular position of the internal magnets 1220 in the second rotor 1310 as shown in Fig. 15E.

Flat magnets are used for the internal and external magnets 1220 and 1420 in the second rotor 1310 as shown in Fig. 15F.

Although the present invention has been fully described in connection with the preferred embodiment thereof with reference to the accompanying drawings, it is to be noted that various changes and modifications will become apparent to those skilled in the art. Such changes and modifications are to be understood as being included within the scope of the present invention as defined by the appended claims.

## Claims

1. A system for driving an electric vehicle having a battery (600), an engine (100) and a vehicle drive member (700, 900), comprising:
a speed-torque converter (1000, 2000, 4000, 5000) having a housing (1710, 1720, 1730, 1920), an input shaft (1213, 1332a, 3210) connected to said engine, an output shaft (1860) connected to said vehicle drive member, a first rotor (1210) having a first control coil (1211), a stator (1410) having a second control coil (1411), a second rotor (1310) having a first member (1220) for generating magnetic field interlinking said first control coil and a second member (1420) for generating magnetic field interlinking said second control coil; **characterised by**
means (1911, 1912) for detecting rotation of said first rotor and said second rotor; and
control current supplying means (200, 400, 500), connected to said battery, said first and second control coils and said rotation detecting means, for supplying said first and second control coils with control electric current according to said rotation of said first and second rotors to convert rotational speed and torque of said engine and drive said vehicle drive member at a set rotational speed with a set torque, wherein said first rotor, said second rotor and said stator are disposed coaxially with each other on a common same plane, wherein said first rotor is disposed radially inside said second rotor and said second rotor is disposed radially inside said stator coaxially, wherein said second rotor further comprises a hollow rotary yoke (1311), wherein a plurality of external permanent magnets (1420) are fixed to the outer periphery of said rotary yoke and a plurality of internal permanent magnets (1220) are fixed to the inner periphery of said rotary yoke, wherein, if one of the internal magnets (1220) facing the first rotor (1210) is polarised S, a corresponding one of the external magnets (1420) facing the stator (1410) is polarised N and the adjacent one of the internal magnets (1220) is polarised N and also the adjacent one of the external magnets (1420) corresponding to the last is polarised S.

2. A system for driving an electric vehicle as claimed in claim 1, wherein said first rotor is connected to said input shaft and said second rotor is connected to said output shaft.

3. A system for driving an electric vehicle as claimed in claim 1, wherein said second rotor is connected to said input shaft and said first rotor is connected to said output shaft.

4. A system for driving an electric vehicle as claimed in any one of claims 1, 2 and 3, wherein said speed-torque converter further comprises a speed reduction means (1800, 4800, 5800) connected in series with said output shaft.

5. A system for driving an electric vehicle as claimed in any one of claims 1, 2, and 3, wherein said speed-torque converter further comprises a planetary-gear speed reduction means (1812, 1820, 1830) connected in series with said output shaft.

6. A system for driving an electric vehicle as claimed in any one of claims 1, 2 and 3, wherein said control current supplying means comprises means for controlling said engine to operate as a brake member when said vehicle drive member drives said output shaft.

7. A system for driving an electric vehicle according to claim 1, wherein said control electric current supplying means comprises a first inverter (200) connected to said first control coil (1211), a second inverter (400) connected to said second control coil (1411) and an inverter control unit (500) connected to said rotation detecting means (1911, 1912) and to said first and second inverters for controlling timing of said control electric current supplied to said first and second control coils by said inverters according to rotation of said first and second rotors.

8. A system for driving an electric vehicle as claimed in any one of the preceding claims, wherein said input shaft and said output shaft are disposed at same side of said housing.

9. A system for driving an electric vehicle as claimed in claim 8, wherein said input shaft and said output shaft are disposed coaxially with each other.

10. A system for driving an electric vehicle as claimed in claim 9, wherein said rotation detecting means is disposed in said housing remote from said input shaft and said output shaft.

11. A system for driving an electric vehicle as claimed in claim 10, wherein said control electric current supplying means comprises brushes and slip rings disposed in said housing remote from said input shaft and said output shaft.

12. A system for driving an electric vehicle as claimed in claim 1, wherein said control electric current supplying means comprises means for generating battery charging current.

13. A system according to claim 1, wherein said magnetic field of said first member (1220) interlinks said first control coil (1211) through one magnetic path, and said magnetic field of said second member (1420) interlinks said second control coil (1411) through the same magnetic path.

14. A system for driving an electric vehicle as claimed in claim 13, wherein said first member comprises a number of magnetic poles and said second member comprises the same number of the magnetic poles.

15. A system for driving an electric vehicle as claimed in claim 14, wherein said rotary yoke comprises a laminated core having a plurality of holes for accommodating said first and second members therein.

16. A system for driving an electric vehicle as claimed in claim 1, wherein said first and second control coils comprise respectively three phase windings.

## Patentansprüche

1. System zum Antrieb eines Elektrofahrzeugs mit einer Batterie (600), einer Kraftmaschine (100) und einem Fahrzeugantriebselement (700, 900), mit
einem Geschwindigkeits-Drehmoment-Wandler (1000, 2000, 4000, 5000) mit einem Gehäuse (1710, 1720, 1730, 1920), einer mit der Kraftmaschine verbundenen Eingangswelle (1213, 1332a, 3210), einer mit dem Fahrzeugantriebselement verbundenen Ausgangswelle (1860), einem ersten Rotor (1210) mit einer ersten Steuerspule (1211), einem Stator (1410) mit einer zweiten Steuerspule (1411), einem zweiten Rotor (1310) mit einem ersten Element (1220) zur Erzeugung eines mit der ersten Steuerspule gekoppelten magnetischen Feldes und einem zweiten Element (1420) zur Erzeugung eines mit der zweiten Steuerspule gekoppelten magnetischen Feldes,
**gekennzeichnet durch**
eine Einrichtung (1911, 1912) zur Erfassung einer Drehung des ersten Rotors und des zweiten Rotors, und
eine mit der Batterie, der ersten und der zweiten Steuerspule und der Drehungserfassungseinrichtung verbundene Steuerstromzufuhreinrichtung (200, 400, 500) zur Zufuhr eines elektrischen Steuerstroms zu der ersten und der zweiten Steuerspule gemäß der Drehung des ersten und des zweiten Rotors zur Wandlung einer Drehgeschwindigkeit und eines Drehmoments der Kraftmaschine und zum Antrieb des Fahrzeugantriebselements bei einer festgelegten Drehgeschwindigkeit mit einem festgelegten Drehmoment, wobei der erste Rotor, der zweite Rotor und der Stator zueinander koaxial an einer gemeinsamen gleichen Ebene angeordnet sind, wobei der erste Rotor radial in dem zweiten Rotor angeordnet ist und der zweite Rotor radial in dem Stator koaxial angeordnet ist, wobei der zweite Rotor ferner ein hohles drehbares Joch (1311) aufweist, wobei eine Vielzahl von externen Dauermagneten (1420) an der äußeren Außenfläche des drehbaren Jochs befestigt ist und eine Vielzahl von inneren Dauermagneten (1220) an der inneren Außenfläche des drehbaren Jochs befestigt ist, wobei, falls einer der inneren Magnete (1220), der dem ersten Rotor (1210) gegenüberliegt, S-polarisiert ist, ein entsprechender Magnet der externen Magnete (1420), der dem Stator (1410) gegenüberliegt, N-polarisiert ist und der benachbarte eine Magnet der internen Magnete (1220) N-polarisiert ist und ebenso der benachbarte eine Magnet der externen Magnete (1420) entsprechend dem letztgenannten S-polarisiert ist.

2. System zum Antrieb eines Elektrofahrzeugs nach Anspruch 1, wobei der erste Rotor mit der Eingangswelle verbunden ist und der zweite Rotor mit der Ausgangswelle verbunden ist.

3. System zum Antrieb eines Elektrofahrzeugs nach Anspruch 1, wobei der zweite Rotor mit der Eingangswelle verbunden ist und der erste Rotor mit der Ausgangswelle verbunden ist.

4. System zum Antrieb eines Elektrofahrzeugs nach einem der Ansprüche 1, 2 und 3, wobei der Geschwindigkeits-Drehmoment-Wandler ferner eine in Serie zu der Ausgangswelle verbundene Geschwindigkeitsreduktionseinrichtung (1800. 4800. 5800) beinhaltet.

5. System zum Antrieb eines Elektrofahrzeugs nach einem der Ansprüche 1, 2 und 3, wobei der Geschwindigkeits-Drehmoment-Wandler ferner eine in Serie zu der Ausgangswelle verbundene Planetengetriebe-Geschwindigkeitsreduktionseinrichtung (1812, 1820, 1830) beinhaltet.

6. System zum Antrieb eines Elektrofahrzeugs nach einem der Ansprüche 1, 2 und 3, wobei die Steuerstromzufuhreinrichtung eine Einheit zur Steuerung der Kraftmaschine zum Betrieb als ein Bremselement beinhaltet, wenn das Fahrzeugantriebselement die Ausgangswelle antreibt.

7. System zum Antrieb eines Elektrofahrzeugs nach Anspruch 1, wobei die Zufuhreinrichtung für den elektrischen Steuerstrom einen mit der ersten Steuerspule (1211) verbundenen ersten Wandler (200), einen mit der zweiten Steuerspule (1411) verbundenen zweiten Wandler (400) und eine mit der Drehungserfassungseinrichtung (1911, 1912) und dem ersten und dem zweiten Wandler verbundene Wandlersteuereinheit (500) zur Steuerung des Zeitverlaufs des durch die Wandler der ersten und der zweiten Steuerspule zugeführten elektrischen Steuerstroms gemäß der Drehung des ersten und des zweiten Rotors beinhaltet.

8. System zum Antrieb eines Elektrofahrzeugs nach einem der vorstehenden Ansprüche, wobei die Eingangswelle und die Ausgangswelle an der gleichen Seite des Gehäuses angeordnet sind.

9. System zum Antrieb eines Elektrofahrzeugs nach Anspruch 8, wobei die Eingangswelle und die Ausgangswelle zueinander koaxial angeordnet sind.

10. System zum Antrieb eines Elektrofahrzeugs nach Anspruch 9, wobei die Drehungserfassungseinrichtung an dem Gehäuse entfernt von der Eingangswelle und der Ausgangswelle angeordnet ist.

11. System zum Antrieb eines Elektrofahrzeugs nach Anspruch 10, wobei die Zufuhreinrichtung für den elektrischen Steuerstrom Bürsten und Schleifringe beinhaltet, die an dem Gehäuse entfernt von der Eingangswelle und der Ausgangswelle angeordnet sind.

12. System zum Antrieb eines Elektrofahrzeugs nach Anspruch 1, wobei die Zufuhreinrichtung für den elektrischen Steuerstrom eine Einheit zur Erzeugung eines Batterieladestroms aufweist.

13. System nach Anspruch 1, wobei das magnetische Feld des ersten Elements (1220) mit der ersten Steuerspule (1211) über einen magnetischen Pfad gekoppelt ist und das magnetische Feld des zweiten Elements (1420) mit der zweiten Steuerspule (1411) über den gleichen magnetischen Pfad gekoppelt ist.

14. System zum Antrieb eines Elektrofahrzeugs nach Anspruch 13, wobei das erste Element eine Zahl an Magnetpolen aufweist und das zweite Element die gleiche Zahl an Magnetpolen aufweist.

15. System zum Antrieb eines Elektrofahrzeugs nach Anspruch 14, wobei das drehbare Joch einen geschichteten Kern mit einer Vielzahl an Öffnungen aufweist, um darin das erste und das zweite Element unterzubringen.

16. System zum Antrieb eines Elektrofahrzeugs nach Anspruch 1, wobei die erste und die zweite Steuerspule jeweils Drei-Phasen-Wicklungen aufweisen.

## Revendications

1. Système destiné à entraîner un véhicule électrique ayant une batterie (600), un moteur (100) et un élément d'entraînement de véhicule (700, 900), comprenant :
un convertisseur de vitesse-couple (1000, 2000, 4000, 5000) ayant un logement (1710, 1720, 1730, 1920), un arbre d'entrée (1213, 1332a, 3210) connecté au dit moteur, un arbre de sortie (1860) connecté au dit élément d'entraînement de véhicule, un premier rotor (1210) ayant une première bobine de commande (1211), un stator (1410) ayant une seconde bobine de commande (1411), un second rotor (1310) ayant un premier élément (1220) destiné à générer un champ magnétique reliant la dite première bobine de commande et un second élément (1420) destiné à générer un champ magnétique reliant la dite seconde bobine de commande ; **caractérisé par**
des moyens (1911, 1912) destinés à détecter la rotation du dit premier rotor et du dit second rotor ; et
des moyens d'alimentation en courant de commande (200, 400, 500), connectés à la dite batterie, aux dites première et seconde bobines de commande et aux dits moyens de détection de rotation, pour alimenter les dites première et seconde bobines de commande en courant électrique de commande selon la dite rotation des dits premier et second rotors pour convertir la vitesse de rotation et le couple du dit moteur et entraîner le dit élément d'entraînement de véhicule à une vitesse de rotation fixée avec un couple fixé, dans lequel le dit premier rotor, le dit second rotor et le dit stator sont disposés coaxialement les uns aux autres sur un même plan commun, dans lequel le dit premier rotor est radialement disposé à l'intérieur du dit second rotor et le dit second rotor est radialement disposé à l'intérieur du dit stator, coaxialement, dans lequel le dit second rotor comprend, en outre, une culasse tournante creuse (1311), dans lequel une pluralité d'aimants permanents externes (1420) sont fixés sur la périphérie extérieure de la dite culasse tournante et une pluralité d'aimants permanents internes (1220) sont fixés sur la périphérie intérieure de la dite culasse tournante, dans lequel, lorsque l'un des aimants internes (1220) tourné vers le premier rotor (1210) a une polarisation S, l'un, correspondant, des aimants externes (1420) tourné vers le stator (1410) a une polarisation N et celui adjacent des aimants internes (1220) a une polarisation N et également celui adjacent des aimants externes (1420) correspondant à ce dernier a une polarisation S.

2. Système destiné à entraîner un véhicule électrique selon la revendication 1, dans lequel le dit premier rotor est connecté au dit arbre d'entrée et le dit second rotor est connecté au dit arbre de sortie.

3. Système destiné à entraîner un véhicule électrique selon la revendication 1, dans lequel le dit second rotor est connecté au dit arbre d'entrée et le dit premier rotor est connecté au dit arbre de sortie.

4. Système destiné à entraîner un véhicule électrique selon l'une quelconque des revendications 1, 2 et 3, dans lequel le dit convertisseur de vitesse/couple comprend, en outre, des moyens de réduction de vitesse (1800, 4800, 5800) connectés en série avec le dit arbre de sortie.

5. Système destiné à entraîner un véhicule électrique selon l'une quelconque des revendications 1, 2 et 3, dans lequel le dit convertisseur de vitesse-couple comprend, en outre, des moyens de réduction de vitesse à engrenage planétaire (1812, 1820, 1830) connectés en série avec le dit arbre de sortie.

6. Système destiné à entraîner un véhicule électrique selon l'une quelconque des revendications 1, 2 et 3, dans lequel les dits moyens d'alimentation en courant de commande comprennent des moyens destinés à commander le dit moteur pour qu'il fonctionne en tant qu'élément de frein lorsque le dit élément d'entraînement de véhicule entraîne le dit arbre de sortie.

7. Système destiné à entraîner un véhicule électrique selon la revendication 1, dans lequel les dits moyens d'alimentation en courant électrique de commande comprennent un premier inverseur (200) connecté à la dite première bobine de commande (1211), un second inverseur (400) connecté à la dite seconde bobine de commande (1411) et une unité de commande d'inverseur (500) connectée aux dits moyens de détection de rotation (1911, 1912) et au dit premier et au dit second inverseurs pour commande les instants auxquels le dit courant électrique de commande est amené aux dites première et seconde bobines de commande par les dits inverseurs selon la rotation des dits premier et second rotors.

8. Système destiné à entraîner un véhicule électrique selon l'une quelconque des revendications précédentes, dans lequel le dit arbre d'entrée et le dit arbre de sortie sont disposés du même côté que le dit logement.

9. Système destiné à entraîner un véhicule électrique selon la revendication 8, dans lequel le dit arbre d'entrée et le dit arbre de sortie sont disposés coaxialement l'un à l'autre.

10. Système destiné à entraîner un véhicule électrique selon la revendication 9, dans lequel les dits moyens de détection de rotation sont disposés dans le dit logement à distance du dit arbre d'entrée et du dit arbre de sortie.

11. Système destiné à entraîner un véhicule électrique selon la revendication 10, dans lequel les dits moyens d'alimentation en courant électrique de commande comprennent des balais et des bagues collectrices disposés dans le dit logement à distance du dit arbre d'entrée et du dit arbre de sortie.

12. Système destiné à entraîner un véhicule électrique selon la revendication 1, dans lequel les dits moyens d'alimentation en courant électrique de commande comprennent des moyens destinés à générer un courant de charge de batterie.

13. Système selon la revendication 1, dans lequel le dit champ magnétique du dit premier élément (1220) relie la dite première bobine de commande (1211) au travers d'un trajet magnétique, et le dit champ magnétique du dit second élément (1420) relie la dite seconde bobine de commande (1411) au travers du même trajet magnétique.

14. Système destiné à entraîner un véhicule électrique selon la revendication 13, dans lequel le dit premier élément comprend un certain nombre de pôles magnétiques et le dit second élément comprend le même nombre de pôles magnétiques.

15. Système destiné à entraîner un véhicule électrique selon la revendication 14, dans lequel la dite culasse tournante comprend un noyau stratifié comportant une pluralité d'orifices destinés à y recevoir les dits premier et second éléments.

16. Système destiné à entraîner un véhicule électrique selon la revendication 1, dans lequel les dites première et seconde bobines de commande comprennent, respectivement, des enroulements triphasés.
